# EUROPÄISCHE PATENTANMELDUNG

(11) **EP 2 842 849 A1**
(43) Veröffentlichungstag der Anmeldung: **04.03.2015**
(21) Anmeldenummer: 14002966.1
(22) Anmeldetag: 27.08.2014
(51) Int. Cl.: B62J 6/04, F21S 8/10

(54) **Fahrradrücklicht**

(30) Priorität: 28.08.2013 DE 102013014337
(71) Anmelder: Winora-Staiger GmbH, 97526 Sennfeld (DE)
(72) Erfinder: Puello, Felix, 97453 Schonungen (DE)
(74) Vertreter: Weigel, Matthias

(57) **Zusammenfassung**

Die Erfindung betrifft ein Fahrradrücklicht (10), mit einem am Rahmen (12) des Fahrrades zu befestigenden Sockel (14), in dem eine Beleuchtungseinheit aufgenommen ist, und einem Beleuchtungskörper (20) zum Abstrahlen des von der Beleuchtungseinheit bei Betrieb abgestrahlten Lichtes an die Umgebung. Erfindungsgemäß dient als Beleuchtungskörper ein Lichtleiter (20), der das von der Beleuchtungseinheit während des Betriebes abgestrahlte Licht zumindest über einen Teil seiner Umfangsfläche (22) an die Umgebung abstrahlt.

## Beschreibung

Die Erfindung betrifft ein Fahrradrücklicht, mit einem am Rahmen des Fahrrades zu befestigenden Sockel, in dem eine Beleuchtungseinheit aufgenommen ist, und einem Beleuchtungskörper zum Abstrahlen des von der Beleuchtungseinheit bei Betrieb abgestrahlten Lichtes an die Umgebung.

Generell besteht für Fahrräder, die im öffentlichen Straßenverkehr zum Einsatz kommen, eine Beleuchtungspflicht. Die Fahrräder müssen sowohl mit aktiven Beleuchtungseinrichtungen, wie Vorderlampe und Rücklicht sowie mit passiven Beleuchtungskomponenten, wie Reflektoren, ausgestattet sein.

Aufgrund der unterschiedlichsten Rahmenarten, Reifengrößen, konstruktionsbedingten Besonderheiten in der Rahmenform ist eine ausreichende Beleuchtung häufig nur mit großem Aufwand realisierbar. Insbesondere die Anordnung des Rücklichtes am Fahrradrahmen führt immer wieder zu Problemen. Bei Mountainbikes und Rennrädern, die häufig nicht mit Schutzblechen versehen sind, kann das Rücklicht nur am Sattelrohr oder an Streben der Hinterradaufhängung befestigt werden. Wird das Rücklicht am Sattelrohr befestigt, tritt wiederum häufig das Problem auf, dass das Rücklicht zumindest teilweise vom Hinterrad verdeckt ist. Seitlich am Fahrrad befestigte Rückleuchten sind wiederum exponiert angeordnete und werden häufig beschädigt. Unabhängig hiervon beeinträchtigen die häufig nachträglich montierten Beleuchtungseinrichtungen auch das Design des Fahrrades.

Der vorliegenden Erfindung liegt daher die Aufgabe zugrunde, ein Fahrradrücklicht anzugeben, dass in am Fahrradrahmen montierten Zustand bei Betrieb für den nachfolgenden Verkehr gut zu erkennen und gleichzeitig vor äußeren Einflüssen gut geschützt ist.

Bei einem Fahrradrücklicht der eingangs genannten Art wird diese Aufgabe erfindungsgemäß dadurch gelöst, dass der Beleuchtungskörper ein Lichtleiter ist, der das von der Beleuchtungseinheit während des Betriebes abgestrahlte Licht zumindest über einen Teil seiner Umfangsfläche an die Umgebung abstrahlt.

Anders als bisher üblich wird bei der Erfindung als Beleuchtungskörper keine Kombination aus Reflektor und Streuscheibe verwendet, bei der der Reflektor das von der Beleuchtungseinheit bei Betrieb abgestrahlte Licht auf die Streuscheibe wirft, welche die Lichtstrahlen breitflächig streut. Stattdessen wird als Beleuchtungskörper ein Lichtleiter verwendet, der das von der Beleuchtungseinheit bei Betrieb abgestrahlte Licht definiert an die gewünschte Stelle am Fahrrad leitet und gleichzeitig über zumindest einen Teil seiner Umfangsfläche großflächig abstrahlt.

Der Vorteil bei Verwendung des Lichtleiters besteht insbesondere darin, dass die eigentliche Beleuchtungseinheit, die im Stand der Technik üblicherweise in unmittelbarer Nähe zum Beleuchtungskörper angeordnet sein muss, an geeigneter Stelle am Fahrradrahmen befestigt werden kann, während der Lichtleiter das Licht gezielt an die Stelle weiterleitet, an der das Rücklicht tatsächlich abgestrahlt werden soll. Der Lichtleiter muss dabei nicht über seine gesamte Länge betrachtet Licht abstrahlen. Es liegt insbesondere im Rahmen der Erfindung, wenn der Lichtleiter, beispielsweise durch als Abschirmungen dienende Blenden, teilweise abgedeckt ist und nur an den gewünschten Stellen Licht an die Umgebung abstrahlt.

Die Form des Lichtleiters kann darüber hinaus auch an den Verlauf des Fahrradrahmens angepasst werden, muss also nicht zwangsläufig eine Stabform aufweisen.

Unabhängig hiervon ist es ferner von Vorteil, dass der Lichtleiter unabhängig von seiner eigenen Einfärbung auch Licht unterschiedlicher Farbe übertragen und abstrahlen kann. So kann die Beleuchtungseinheit beispielsweise mit einer rotes Licht abstrahlenden Diode versehen sein.

Weitere Vorteile der Erfindung ergeben sich aus der nachfolgenden Beschreibung, den Unteransprüchen und den Zeichnungen.

Bei einer besonders bevorzugten Ausführungsform des erfindungsgemäßen Fahrradrücklichtes ist der Lichtleiter stabförmig und mit seinem einen Ende in dem Sockel nahe der Beleuchtungseinheit derart gehalten, dass das von der Beleuchtungseinheit bei Betrieb abgestrahlte Licht auf die Stirnseite des Lichtleiters fällt. Durch diese Art der Anordnung kann die Beleuchtungseinheit selbst beabstandet zur eigentlichen Beleuchtungsstelle angeordnet sein. Ferner ist es auch möglich, im Sockel des Fahrradrücklichtes alle für den Betrieb der Beleuchtungseinheit notwendigen Komponenten, wie elektronische Steuerung, Spannungsversorgung bzw. Anschluss der Spannungsversorgung im Sockel aufzunehmen, der dann vergleichsweise groß dimensioniert sein kann. Der stabförmige Lichtleiter kann eine über seine Länge betrachtet gleichmäßige runde oder ovale Querschnittsform haben. Denkbar ist auch, die Querschnittsform des Lichtleiters mit einer definierten Kontur, beispielsweise im Querschnitt U-förmig, dreieckig, mehreckig, oder auch T-förmig, pilzförmig etc. zu gestalten.

Um den stabförmigen Lichtleiter gegenüber äußeren Einflüssen, wie Schlägen, Regen, Feuchtigkeit etc., zu schützen, weist das erfindungsgemäße Fahrradrücklicht vorzugsweise einen Gegenhalter auf, der durch ein längliches Verbindungselement mit dem Sockel verbunden ist, wobei der stabförmige Lichtleiter mit seinen beiden Enden zwischen dem Sockel und dem Gegenhalter gehalten ist und das längliche Verbindungselement einen Teil der Umfangsfläche des Lichtleiters abdeckt. Hierdurch wird nicht nur erreicht, dass der Lichtleiter vor äußeren Einflüssen geschützt ist. Darüber hinaus wird auch sichergestellt, dass das Rücklicht nicht unbeabsichtigt in Fahrrichtung gesehen nach vorne abstrahlt, was sowohl beim Fahrradbenutzer als auch beim entgegenkommenden Verkehr für Verwirrung sorgen kann. Die Breite und Querschnittsform des länglichen Verbindungselements kann dabei gezielt an die Querschnittform des Lichtleiters angepasst werden, so dass der Lichtleiter vom Verbindungselement über seinen Querschnitt betrachtet teilweise umschlossen und von diesem aufgenommen ist.

Um das vom Lichtleiter abgestrahlte Licht zusätzlich in eine definierte Richtung zu lenken, wird ferner vorgeschlagen, die dem Lichtleiter zugewandte Oberfläche des länglichen Verbindungselementes zumindest abschnittsweise mit einem Reflektor zu versehen. Der Reflektor kann hierbei als separater Einsatz ausgeführt sein. Alternativ wird vorgeschlagen, die Oberfläche des Verbindungselementes mit einer reflektierenden Beschichtung zu versehen oder zu bekleben.

Um einen definierte Abstrahlung des Lichtes zu erreichen, wird bei einer besonders bevorzugten Ausführungsform des erfindungsgemäßen Fahrradrücklichtes vorgeschlagen, am Lichtleiter, beispielsweise durch Ausformen entsprechender Materialanhäufungen, mindestens ein optisches Element vorzusehen, mit dem ein Teil des durch den Lichtleiter strahlenden Lichtes fokussiert und normal zur Umfangsfläche des Lichtleiters umgelenkt wird.

Bei der mit dem Verbindungselement ausgestatteten Variante des erfindungsgemäßen Fahrradrücklichtes hat der Lichtleiter vorzugsweise zumindest an seiner dem Verbindungselement abgewandten Umfangsfläche quer zu seiner Längsrichtung betrachtet einen abgerundeten Querschnitt. Hierdurch wird erreicht, dass der Lichtleiter das Licht gleichmäßig abstrahlt und so das mit dem erfindungsgemäßen Fahrradrücklicht ausgestattete Fahrrad für den nachfolgenden Verkehr sehr gut erkennbar ist.

Zur Erleichterung der Montage bilden bei der mit dem Verbindungselement ausgestatteten Variante des erfindungsgemäßen Fahrradrücklichtes der Sockel, das Verbindungselement sowie der Gegenhalter eine dem Lichtleiter abgewandte gemeinsame Rückseite, an der eine sich über die gesamte Länge der Rückseite erstreckende konkave Ausnehmung gleichbleibender Querschnittsform ausgeformt ist. Die konkave Querschnittsform der Ausnehmung erleichtert die Montage des Fahrradrücklichtes insbesondere an Rohren des Fahrradrahmens, da die durch die konkave Querschnittsform das Fahrradrücklicht sich selbst am Rohr ausrichtet und dadurch großflächig am Rohr anliegt und auf diese Weise auch gegen seitliches Verrutschen gesichert ist.

Zum Befestigen des Fahrradrücklichtes am Fahrradrahmen wird vorzugsweise die Verwendung mindestens einer Rastverbindung vorgeschlagen. Zur Ausbildung der Rastverbindung wird beispielsweise am Fahrradrahmen an geeigneter Stelle eine Rasterhebung befestigt, die mit einer beispielsweise am Sockel ausgebildeten Rastaufnahme verrastbar ist. Alternativ ist aus es auch möglich, das Fahrradrücklicht mit Hilfe von Schellen, Muffen und ähnlichem am Fahrradrahmen zu befestigen. Auch liegt es im Rahmen der Erfindung, das Fahrradrücklicht durch einen geeigneten Kleber am Fahrradrahmen durch Kleben zu befestigen.

Die Beleuchtungseinheit des erfindungsgemäßen Fahrradrücklichtes weist vorzugsweise eine eigene Spannungsversorgung, beispielsweise in Form von Batterien oder Akkumulatoren, auf. Diese ist beispielsweise im Sockel des Fahrradrücklichtes aufgenommen. Ebenso kann die für den Betrieb des Fahrradrücklichtes notwendige Steuerung im Sockel aufgenommen sein. Ist da Fahrradrücklicht mit dem Gegenhalter und dem Verbindungselement versehen, können der Gegenhalter und das Verbindungselement als Hohlkörper ausgeführt sein, die gleichfalls oder lediglich zur Aufnahme der Spannungsversorgung und der Steuerung ausgebildet sind. Auch ist es alternativ oder ergänzend hierzu möglich, das Fahrradrücklicht mit der Spannungsversorgung des Fahrrades, beispielsweise des Dynamos oder einer Akkumulatoreneinheit des Fahrrades, zu verbinden.

Nachfolgend wird die Erfindung anhand eines Ausführungsbeispiels unter Bezugnahme auf die Zeichnung näher erläutert. Darin zeigt
- Fig. 1: eine Seitenansicht eines ersten Ausführungsbeispiels eines erfindungsgemäßen Fahrradrücklichtes, das an einem Sattelrohr befestigt ist,
- Fig. 2: eine Draufsicht auf das Fahrradrücklicht in demontiertem Zustand, und
- Fig. 3: eine Unteransicht des Fahrradrücklichtes in demontiertem Zustand.

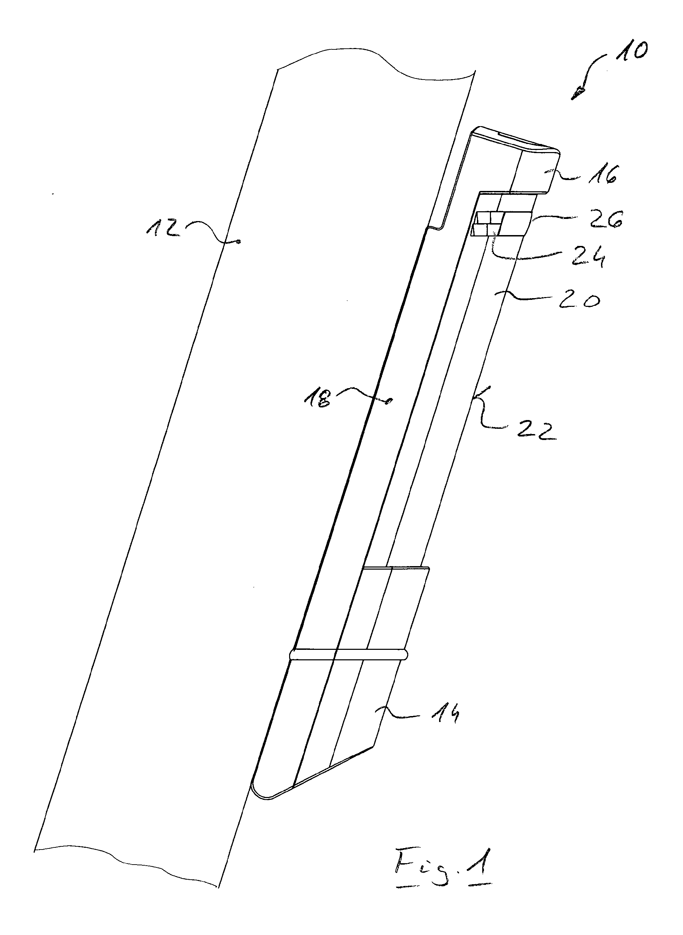

In Fig. 1 ist in Seitenansicht ein erfindungsgemäßes Fahrradrücklicht 10 gezeigt, das an einem Sattelrohr 12 eines nicht nähr gezeigten Fahrradrahmen befestigt ist.

Das Fahrradrücklicht 12 weist einen Sockel 14, einen Gegenhalter 16 sowie ein den Sockel 14 mit dem Gegenhalter 16 verbindendes längliches Verbindungselement 18 auf. Zwischen dem Sockel 14 und dem Gegenhalter 16 ist ein Lichtleiter 20 angeordnet. Der Lichtleiter 20 ist mit seinem unteren Ende im Sockel 14 befestigt, während sein oberes Ende im Gegenhalter 16 befestigt ist.

Wie die Fig. 1, 2 und 3 zeigen, ist der Lichtleiter 20 stabförmig und hat einen im wesentlichen runden Querschnitt. Die untere Stirnseite (nicht dargestellt) des Lichtleiters 20 ist derart im Sockel 14 angeordnet und befestigt, dass die untere Stirnseite Lichtleiters 20 nahe dem Lichtsaustritt einer im Sockel 14 aufgenommenen Beleuchtungseinheit (gleichfalls nicht dargestellt) positioniert ist. Sobald die Beleuchtungseinheit in Betrieb genommen wird, bestrahlt die Beleuchtungseinheit die Stirnseite des Lichtleiters 20 mit Hilfe einer Diode oder mit Hilfe eines anderen Leuchtmittels mit rotem Licht. Der Lichtleiter 20 ist so ausgebildet, dass das auf die Stirnseite auftreffende Licht der Beleuchtungseinheit durch den Lichtleiter 20 gelenkt wird und dabei gleichmäßig über die gesamte Umfangsfläche 22 an die Umgebung abgestrahlt wird.

Um eine zusätzliche Erhöhung der Strahlungsintensität zu erreichen ist ferner am Lichtleiter 20 nahe dem Gegenhalter 16 an der Umfangsfläche 22 des Lichtleiters 20 ein Strahlungsteiler 24 vorgesehen, der das durch den Lichtleiter 20 gelenkte Licht teilweise bündelt und etwa normal zur Umfangsfläche 22 aus dem Lichtleiter 20 lenkt. Dabei ist zusätzlich im Bereich des Strahlungsteilers eine umlaufende wulstförmige Erhebung 26 ausgebildet, die das umlenkte Licht unter einem vorbestimmten Lichtkegel von etwa 20 bis 30° bezogen auf die Normale in die Umgebung abstrahlt.

Das längliche Verbindungselement 18 ist an seiner dem Lichtleiter 20 zugewandten Innenseite mit einer im Querschnitt betrachtet abgerundete Aufnahme (nicht dargestellt) versehen, deren Krümmungsradius zumindest annähernd dem Krümmungsradius des Lichtleiters 20 entspricht. Gleichzeitig ist der Rand der Aufnahme soweit in Richtung des Lichtleiters 20 vorgezogen, dass die Umfangsfläche 22 des Lichtleiters 20 teilweise abgedeckt ist und der Lichtleiter 20 bezogen auf den Fahrradrahmen in normaler Fahrrichtung gesehen im wesentlichen nach hinten abstrahlt. Die Innenseite der Aufnahme ist ferner mit einer reflektierenden Schicht versehen, so dass das in die Aufnahme von Lichtleiter 20 abgestrahlte Licht nach hinten reflektiert wird.

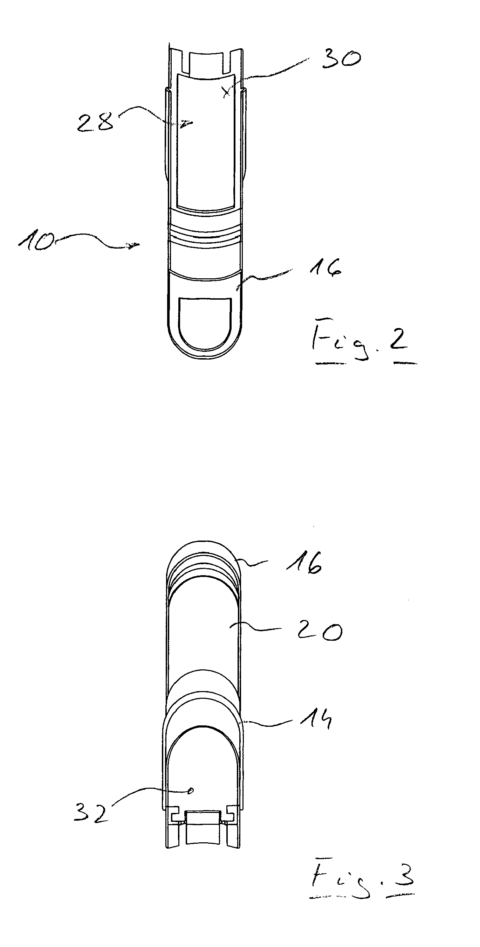

Wie insbesondere Fig. 2 zeigt, bilden der Sockel 14, das Verbindungselement 18 sowie der Gegenhalter 16 eine dem Lichtleiter 20 abgewandte gemeinsame Rückseite 28. Die Rückseite 28 ist mit einer sich über ihre gesamte Länge erstreckenden konkaven Ausnehmung 30 gleichbleibenden Querschnitts versehen. Die konkave Querschnittsform der Ausnehmung 30 erleichtert die Montage des Fahrradrücklichtes 10 am Sattelrohr 12 des Fahrradrahmens, da sich das Fahrradrücklicht durch die konkave Querschnittsform selbst am Sattelrohr 12 ausrichtet und dadurch großflächig am Sattelrohr 12 anliegt und auf diese Weise auch gegen seitliches Verrutschen gesichert ist.

Wie Fig. 3 zeigt, ist an der Unterseite des Sockels 14 eine schwenkbare Abdeckung 32 vorgesehen. Die Abdeckung 32 ist durch eine Rastverbindung geseicht und erlaubt den Zugang zu dem Inneren des Sockels 14 und dem als Hohlkörper ausgebildeten Verbindungselement 16. Im Verbindungselement 16 und im Sockel 14 sind die für den Betrieb der Beleuchtungseinheit erforderlichen Steuerungselemente sowie eine Spannungsversorgung aufgenommen.

Die Befestigung des Fahrradrücklichtes 10 am Sattelrohr 12 erfolgt durch eine Rastverbindung. Hierzu ist am Sattelrohr 12 eine Rasterhebung befestigt (nicht dargestellt), die mit einer am Verbindungselement ausgebildeten Rastaufnahme verrastet. Des weiteren ist am Sattelrohr 12 eine Zugangsöffnung vorgesehen, über die eine vom Lenker geführte Steuerleitung in den Sockel 14 geführt ist, durch die vom Lenker aus das Fahrradrücklicht 10 betätigt werden kann.

Im Betrieb dient der Lichtleiter 20 als Beleuchtungskörper, mit dem das von der Beleuchtungseinheit abgestrahlte Licht definiert an die gewünschte Stelle am Fahrrad geleitet und gleichzeitig über zumindest einen Teil seiner Umfangsfläche 22 großflächig abstrahlt wird.

Der Vorteil bei Verwendung des Lichtleiters 20 besteht insbesondere darin, dass die eigentliche Beleuchtungseinheit an geeigneter Stelle am Fahrradrahmen befestigt werden kann, während der Lichtleiter 20 das Licht gezielt an die Stelle weiterleitet, an der das Rücklicht tatsächlich abgestrahlt werden soll. Der Lichtleiter 20 strahlt dabei nicht über seine gesamte Länge betrachtet Licht ab, sondern strahlt das Licht nur an den gewünschten Stellen an die Umgebung ab.

### Bezugszeichenliste:

- 10: Fahrradrücklicht
- 12: Sattelrohr
- 14: Sockel
- 16: Gegenhalter
- 18: Verbindungselement
- 20: Lichtleiter
- 22: Umfangsfläche
- 24: Strahlungsteiler
- 26: wulstförmige Erhebung
- 28: Rückseite
- 30: Ausnehmung
- 32: Abdeckung

## Patentansprüche

1. Fahrradrücklicht, mit einem am Rahmen (12) des Fahrrades zu befestigenden Sockel (14), in dem eine Beleuchtungseinheit aufgenommen ist, und einem Beleuchtungskörper (20) zum Abstrahlen des von der Beleuchtungseinheit bei Betrieb abgestrahlten Lichtes an die Umgebung,
**dadurch gekennzeichnet,**
**dass** der Beleuchtungskörper ein Lichtleiter (20) ist, der das von der Beleuchtungseinheit während des Betriebes abgestrahlte Licht zumindest über einen Teil seiner Umfangsfläche (22) an die Umgebung abstrahlt.

2. Fahrradrücklicht nach Anspruch 1, **dadurch gekennzeichnet, dass** der stabförmige Lichtleiter (20) in dem Sockel (14) nahe der Beleuchtungseinheit derart gehalten ist, dass das von der Beleuchtungseinheit bei Betrieb abgestrahlte Licht auf die Stirnseite des Lichtleiters (20) fällt.

3. Fahrradrücklicht nach Anspruch 1 oder 2, **dadurch gekennzeichnet, dass** das Fahrradrücklicht (10) einen Gegenhalter (16) aufweist, der durch ein längliches Verbindungselement (18) mit dem Sockel (14) verbunden ist, und dass der Lichtleiter (20) zwischen dem Sockel (14) und dem Gegenhalter (16) angeordnet ist und das längliche Verbindungselement (18) einen Teil der Umfangsfläche (22) des Lichtleiters (20) abdeckt.

4. Fahrradrücklicht nach Anspruch 3, **dadurch gekennzeichnet, dass** die dem Lichtleiter (20) zugewandte Oberfläche des länglichen Verbindungselementes (18) zumindest abschnittsweise mit einem Reflektor versehen ist.

5. Fahrradrücklicht nach einem der Ansprüche 3 oder 4, **dadurch gekennzeichnet, dass** am Lichtleiter (20) mindestens ein optisches Element (24, 26) zum teilweisen Fokussieren und Umleiten eines Teiles des durch den Lichtleiter (20) strahlenden Lichtes normal zur Umfangsfläche (22) des Lichtleiters (20) vorgesehen ist.

6. Fahrradrücklicht nach einem der Ansprüche 3, 4 oder 5, **dadurch gekennzeichnet, dass** der Lichtleiter (20) zumindest an seiner dem Verbindungselement (18) abgewandten Umfangsfläche (22) quer zu seiner Längsrichtung betrachtet einen abgerundeten Querschnitt aufweist.

7. Fahrradrücklicht nach einem der Ansprüche 3 bis 6, **dadurch gekennzeichnet, dass** der Sockel (14), das Verbindungselement (18) sowie der Gegenhalter (16) eine dem Lichtleiter (20) abgewandte gemeinsame Rückseite (28) bilden, an der eine sich über die gesamte Länge der Rückseite (28) erstreckende konkave Ausnehmung (30) gleichbleibender Querschnittsform ausgeformt ist.

8. Fahrradrücklicht nach einem der vorhergehenden Ansprüche, **dadurch gekennzeichnet, dass** das Fahrradrücklicht (10) durch mindestens eine Rastverbindung an dem Fahrradrahmen (12) zu befestigen ist.

9. Fahrradrücklicht nach einem der vorhergehenden Ansprüche, **dadurch gekennzeichnet, dass** die Beleuchtungseinheit eine eigene Spannungsversorgung aufweist.
